# EUROPÄISCHE PATENTSCHRIFT

(11) **EP 2 136 303 B1**
(45) Veröffentlichungstag und Bekanntmachung des Hinweises auf die Patenterteilung: **04.06.2014**
(21) Anmeldenummer: 08011162.8
(22) Anmeldetag: 19.06.2008
(51) Int. Cl.: G06F 17/30

(54) **Verfahren zum Steuern einer automatischen Aktualisierung von Datensichten in einem Computersystem**
Method for controlling an automatic update of data views in a computer system
Procédé de commande d'une actualisation automatique de visualisations de données dans un système informatique

(43) Veröffentlichungstag der Anmeldung: 23.12.2009
(73) Patentinhaber: Scopeland Technology GmbH, 16547 Birkenwerder (DE)
(72) Erfinder: Kucharski Dirk, 16515 Oranienburg (DE); Meier Christian, 13089 Berlin (DE); Noack Karsten, 16547 Birkenwerder (DE)
(74) Vertreter: Bittner, Thomas L.

(56) Entgegenhaltungen:
- STANOI I, AGRAWAL D, EL ABBADI A: "Modeling and Maintaining Multi-view Data Warehouses" LECTURE NOTES IN COMPUTER SCIENCE, CONCEPTUAL MODELLING - ER '99, Bd. 1728, 1999, Seiten 161-176, XP002506835 Berlin/Heidelberg
- LABRINIDIS A ET AL: "WebView materialization" ACM PROCEEDINGS OF SIGMOD. INTERNATIONAL CONFERENCE ON MANAGEMENT OF DATA, XX, XX, Bd. 29, Nr. 2, 16. Mai 2000 (2000-05-16), Seiten 367-378, XP002171255
- SEGEV A ET AL: "MAINTAINING MATERIALIZED VIEWS IN DISTRIBUTED DATABASES" PROCEEDINGS OF THE INTERNATIONAL CONFERENCE ON DATA ENGINEERING. LOS ANGELES, FEB. 6 - 10, 1989; [PROCEEDINGS OF THE INTERNATIONAL CONFERENCE ON DATA ENGINEERING], WASHINGTON, IEEE COMP. SOC. PRESS, US, Bd. CONF. 5, Nr. 1989, 6. Februar 1989 (1989-02-06), Seiten 262-270, XP000041893 ISBN: 978-0-8186-9915-3

## Beschreibung

Die Erfindung betrifft ein Verfahren zum Steuern einer automatischen Aktualisierung von Datensichten in einem Computersystem.

### Hintergrund der Erfindung

Um zum Beispiel den Aufwand für die Softwareerstellung, insbesondere bei sogenannten Individuallösungen, die nur für ein einziges Anwendungsproblem entwickelt werden, zu reduzieren, werden teilweise Programme eingesetzt, mit denen ganz ohne Programmierung oder zumindest mit deutlich weniger Programmieraufwand Anwendungssoftware konfiguriert werden kann. So werden zum Beispiel Datensichten mittels Drag and Drop und ähnlich einfacher Verfahren in zu entwickelnde Formulare eingefügt und mehr oder weniger deklarativ miteinander verknüpft, zum Beispiel indem Selektions- oder Auswahlbedingungen für untergeordnete (Detail-) Datensichten in dynamischer Abhängigkeit von den konkreten, jeweils gerade angezeigten Inhalten anderer (Master-) Datensichten als variable Bezüge eingetragen werden, oder diese Abhängigkeiten sogar mit Hilfe einer gut ausgebauten Benutzerführung gänzlich automatisch generieren lässt.

Ähnliches gilt für Programmentwicklungsumgebungen, die den Programmierer durch die Generierung von unfertigem Programmcode unterstützen sollen und die zunehmend ähnliche Bedienabläufe enthalten. Auf jeden Fall hat der Stand der Technik Tools hervorgebracht, bei denen sehr einfach und komfortabel zahlreiche Datensichten auf komplexe Art und Weise zusammen dargestellt und miteinander verknüpft werden können, zum Beispiel in einem so genannten Master-Detail-Verhältnis.

Wird nun ein Datensatz in einer solchen Masterdatensicht gewechselt, so ändert sich der Kontext des Detailsatzes, und dieser muss demzufolge neu aus der Datenbank selektiert (aktualisiert) werden. In realen Anwendungsprogrammen werden meist mehrere Datensichten verwendet, die auf unterschiedlichste Art und Weise miteinander in Beziehung stehen. Weitere zusätzliche Datensichten sind solche für dynamische Auswahllisten (zum Beispiel von anderen Daten abhängige Listboxen), die in gleicher Weise mit den anderen und miteinander verknüpft sind.

Sind nun viele Datensichten auf vielfältige Art und Weise miteinander verknüpft, so bildet sich ein für den Entwickler schier unübersehbar komplexes Netzwerk von Beziehungen, die teilweise sogar rekursiv sein können. Selbst wenn unterstellt wird, dass der Benutzer korrekt festlegen kann, welches Ereignis optimalerweise zur Folge haben muss, welche Datensichten in welcher Reihenfolge aktualisiert werden sollen, so hilft dies nicht, wenn ein automatisches Programm eingesetzt werden soll. Fehlende Aktualisierungen führen zur Anzeige oder gar zum Abspeichern falscher Daten; und unnötige oder mehrfache Aktualisierungen führen zu zum Teil drastischen Performancebeeinträchtigungen.

Das Problem besteht im Grunde genommen darin, dass eine Datensicht oft nicht wissen kann, wann sie sich zu aktualisieren hat, zum Beispiel dann, wenn sie von mehreren anderen Datensichten abhängt, die sich vielleicht auch noch gegenseitig "anstoßen", und ebenso eine Datensicht oder Variable nicht wissen kann, in welcher Reihenfolge die von ihr abhängigen Datensichten zu aktualisieren sind, weil diese ja noch zusätzlich voneinander abhängig sein könnten.

Ein weiteres Problem besteht darin, dass eine Datensicht in der Regel auch nicht wissen kann, ob es notwendig und sinnvoll ist, nach dem Aktualisieren zu versuchen, denselben Datensatz wiederzufinden, der vorher angezeigt wurde. Meist ist dieses "Behalten" des aktuellen Datensatzes ausdrücklich erwünscht, und zwar sowohl aus Gründen der Benutzerfreundlichkeit als auch zur Vermeidung unnötiger Aktualisierungen der davon abhängigen Datensichten (von deren Detaildaten). Andererseits aber ist es auch nicht sinnvoll, diesen Versuch des Wiederauffindens des vorherigen Datensatzes in allen Fällen vorzunehmen, denn unter bestimmten Umständen kann auch dies zu drastischen Leistungseinbußen führen. Dies ist zum Beispiel dann der Fall, wenn die Detaildatensicht eine große Anzahl von Datensätzen umfasst, von denen aber nur die ersten Datensätze angezeigt werden müssen, solange der Benutzer nicht explizit in dieser Datensicht nach unten scrollt. Ein aussichtsloser Versuch, einen Datensatz wiederzufinden, der überhaupt nicht mehr in der Selektion enthalten ist, hätte also zur Folge, dass unnötigerweise sämtliche Datensätze, die diesen Selektionsbedingungen entsprechen, aus der Datenbank ausgelesen werden müssten. Folglich besteht also auch in der Frage, ob die Datensätze nach dem Aktualisieren "behalten" werden sollen, bei automatischen Lösungsansätzen ein weiterer, zusätzlicher Optimierungsbedarf.

Eine rein zentralistische Lösung zur fehlerfreien und zugleich optimierten Steuerung der Aktualisierungsabfolge und -ausprägung hätte aber ausgesprochenen KI-Charakter (KI - Künstlichen Intelligenz) und wäre allein aufgrund des hiermit verbundenen Aufwands (Inferenzmaschine oder dergleichen) zu voluminös, um dies letztlich in einen Programmcode einer Anwendungssoftware mit hineinzugenerieren.

Als Datensicht sei hier eine logische Sicht auf eine oder mehrere Datenbanktabellen mit einer festen Anzahl Spalten und einer variablen Anzahl Zeilen bezeichnet. Eine solche Datensicht kann auf unterschiedliche Art und Weise erzeugt werden, zum Beispiel mittels einer SQL-Abfrage, einer *Stored Procedure* oder eines *Views* oder durch eine anders geartete Methode, welche Daten in vergleichbarer Art und Weise bereitstellt. Diese Daten werden aus technischen Gründen in der Regel vor der Anzeige oder Weiterverarbeitung der Daten in einem Puffer in einem Hauptspeicher zwischengespeichert. Solch ein Zwischenspeicher wird zum Beispiel in der Entwicklungs- und Laufzeitumgebung ".net" der Firma Microsoft als *Dataset* bezeichnet. Eine solche Datensicht wird häufig nicht nur für die Anzeige von Daten benutzt, sondern auch als Grundlage für Änderungen, das Löschen von Daten oder die Eingabe neuer Daten, indem die Änderungen zunächst in den Zwischenspeicher (den *Dataset*) geschrieben und von dort aus in einem Zuge in die Datenbank zurückgeschrieben werden. Solche Datensichten werden herstellerspezifisch auch als Super-Datensicht ("*SuperView*") oder Direktdatensicht ("*DirectView*") bezeichnet.

Um einen jeweils momentan "aktiven" Datensatz einer Datensicht, der zum Beispiel in diesem Moment in einer Formularansicht angezeigt wird oder der als ausgewählt optisch gekennzeichnet ist, zu bezeichnen, enthalten Datensichten in der Regel einen Datensatzzeiger in Form einer Variable, die eine jeweils gerade aktive Satznummer enthält und somit anzeigt, welcher Datensatz aktiv ist.

Datensichten stellen einen zentralen Baustein vieler Arten von Datenbankanwendungen dar. In komplexeren Programmen sind Datensichten voneinander abhängig, zum Beispiel in der Master-Detail-Darstellung, bei der eine zweite Datensicht, nämlich eine Detaildatensicht, Inhalte aus einer ersten Datensicht, nämlich einer Masterdatensicht, in einer Selektions- oder Auswahlbedingung verwendet.

Datensichten werden in der Regel manuell und zum Teil unbewusst vom Entwickler angelegt und miteinander verknüpft. Moderne CASE- ("*Computer-aided Software Engeneering*") oder MDA- ("*Model-driven Architecture*") Systeme sowie Konfigurierwerkzeuge verwenden in unterschiedlichen Ausprägungen solche Datensichten hingegen als zentralen Baustein der Konfigurationsarbeit.

Aus dem Dokument Stanoi et al. ("Modeling and Maintaining Multiview Data Warehouse" LECTURE NOTES IN COMPUTER SCIENCE, CONCOEPTUAL MODELLING - ER '99, Bd. 1728, 1999, Seiten 161-176) ist ein allgemeine Framework zum Modellieren der Pflege von Mehrfachsichten in einer verteilten Datenbank bekannt. Ein wesentliches Element besteht darin, dass in einer Mehrfachsicht-Umgebung ein soggenannter View Informationen von den Quelldaten über mehrere Wege ableiten kann.

Das Dokument Labrinidis et al. ("WebView materialization" ACM PROCEEDINGS OF SIGMOD. INTERNATIONAL CONFERENCE ON MANAGEMENT OF DATA, Bd. 29, Nr. 2, 16. Mai 2000, Seiten 367-378) betrifft einen soggenannten Webview einer Webseite, die automatisch aus Basisdaten erzeugt wird.

Das Dokument Segev et al. ("Maintaining materialized views in distributed databases" PRO-CEEDINGS OF THE INTERNATIONAL CONFERENCE ON DATA ENGINEERING. LOS ANGELES; Bd. CONF. 5, Nr. 1989, 6. Februar 1989, Seiten 262-270) betrifft die Wartung sogenannter materialized Views in verteilten Datenbanken.

### Zusammenfassung der Erfindung

Aufgabe der Erfindung ist es, ein verbessertes Verfahren zum Steuern einer automatischen Aktualisierung von Datensichten in einem Computersystem zu schaffen, welches die Probleme des Standes der Technik vermeidet und insbesondere eine fehlerfreie und zugleich optimierte Steuerung der Aktualisierung ermöglicht. Insbesondere im Umfeld des Software-Engineerings soll der Prozess der automatischen Aktualisierung von mehreren verknüpften Datensichten effizienter gesteuert werden.

Diese Aufgabe wird erfindungsgemäß durch ein Verfahren zum automatischen Aktualisieren von Datensichten in einem Computersystem nach dem unabhängigen Anspruch 1 gelöst. Vorteilhafte Ausgestaltungen der Erfindung sind Gegenstand von abhängigen Unteransprüchen. Vorteil der Erfindung ist es, dass eine einfach umsetzbare und objektorientierte Lösung geschaffen wurde, die eine sichere und zuverlässige Steuerung des Aktualisierens von Datensichten, die über komplizierte Verknüpfungsstrukturen miteinander in Beziehung stehen können, gewährleistet ist, und dies so, dass überflüssige oder redundante Datenbankzugriffe und daraus resultierende Leistungseinbußen weitestgehend vermieden werden. Nach dem Prinzip einer kollektiven Eigenintelligenz wird das Netzwerk der Datensichten auch in den kompliziertesten Vernetzungsfällen automatisch so durchlaufen, dass eine jeweils korrekte und zugleich optimierte Aktualisierung stattfindet. Das vorgeschlagene Verfahren führt zu einer rekursiven Aktualisierung.

In einer Ausgestaltung der Erfindung kann vorgesehen sein, dass bei der Aktualisierungsoperation der Datensicht diese eine Aufforderung, ein jeweils zugeordnetes Refresh-Flag zu setzen, an die anderen Datensichten sendet. Weiterhin kann in einer Ausgestaltung ergänzend hierzu oder unabhängig hiervon vorgesehen sein, dass die anderen Datensichten eine jeweilige Rückmeldung an die Datensicht geben, die anzeigt, dass das jeweilige Refresh-Flag gesetzt wurde oder nicht. Letzteres erfolgt vorzugsweise vor der jeweiligen Aktualisierung in den anderen Datensichten.

Eine bevorzugte Weiterbildung der Erfindung sieht vor, dass die Datensichten als lesende / schreibende Direktdatensichten gebildet werden. Direktdatensichten zeichnen sich dadurch aus, dass sie eine lesende und schreibende Datensicht auf das Datenbanksystem darstellen. Im Gegensatz zu einer einfachen Datensicht erlaubt die Direktdatensicht, Daten einzufügen, zu ändern oder zu löschen und die Änderung in das Datenbanksystem konsistent zurückzuschreiben. Eine Direktdatensicht wird nicht in dem Datenbankmanagementsystem, sondern in Form von Metadaten gespeichert und üblicherweise für eine Generierung eines notwendigen SQL-Statements ausgewertet.

Bei einer zweckmäßigen Ausgestaltung der Erfindung kann vorgesehen sein, dass die Datensichten gemäß der Verknüpfungsstruktur einer hierarchischen Ordnung entsprechend miteinander verknüpft werden und dass das automatische Aktualisieren in einem von der Datensicht gebildeten Ursprung der hierarchischen Ordnung beginnend und sich dann der hierarchischen Ordnung entsprechend fortsetzend ausgeführt wird. Auf diese Weise wird der Tatsache Rechnung getragen, dass oftmals eine natürliche Hierarchie wie zum Beispiel vom Master zum Detail besteht, welche sinnvollerweise den Ausgangspunkt und die bevorzugten Hauptwege des Ablaufs determiniert.

Eine vorteilhafte Ausführungsform der Erfindung sieht vor, dass weiterhin die folgenden Schritte ausgeführt werden, wenn in der Datensicht ein Datensatzwechsel stattgefunden hat: Setzen des jeweiligen Refresh-Flags in den anderen Datensichten, die nach der Verknüpfungsstruktur direkt in Beziehung zu der Datensicht stehen und von der Datensicht abhängig sind, Senden einer Aufforderung, sich zu aktualisieren, von der Datensicht an die anderen Datensichten und Aktualisieren der anderen Datensichten mittels Zugriff auf das Datenbanksystem, sofern das jeweilige Refresh-Flag der anderen Datensichten noch gesetzt ist.

Es kann vorgesehen sein, dass die Wirkung der Datensicht auf eine der anderen Datensichten, nämlich die Refresh-Flag-Setzung und somit der Anstoß zum Aktualisieren, unterdrückt wird. Dies kann vorgesehen sein, wenn sich konkrete Dateninhalte, welche Selektionsbedingungen in der anderen nachgeordneten Datensicht darstellen, nach einem Datensatzwechsel oder dem Aktualisieren wieder dieselben sind wie vorher, weil entweder der Datensatzzeiger wieder auf derselben Datensatz zeigt wie vorher oder der nun aktuelle Datensatz an den entsprechenden Stellen zufällig dieselben Werte enthält.

Es ist vorgesehen, dass der Aktualisierungsprozess weiter verfeinert wird, indem eine jede Datensicht nach dem Aktualisieren nur dann versucht, den Datensatz, auf welchen ein Datensatzzeiger vor dem Aktualisieren gezeigt hatte, wiederzufinden, um also den bisherigen

Datensatz in der Anzeige zu "behalten", wenn dies möglich und beabsichtigt ist. Möglich ist dies nur dann, wenn zu erwarten ist, dass der Datensatz unter neuen Selektionsbedingungen erneut enthalten ist, und beabsichtigt ist dies dann, wenn es im logischen Zusammenhang vom Benutzer auch erwartet wird. Dieser Versuch, der meist erwünscht ist, muss also gezielt immer dann unterdrückt werden, wenn sich aus der Situation heraus ableiten lässt, dass er ohnehin nicht oder kaum erfolgreich sein kann, weil die vorherigen und die neuen Selektionsbedingungen sich widersprechen. Hierzu wird für jede Datensicht zusätzlich noch ein zweites Flag, ein sogenanntes Hold-Flag, vorgesehen, was besagt, ob versucht werden soll, den Datensatz innerhalb der neu selektierten Datensicht wiederzufinden. Eine jede Datensicht setzt hierzu das Hold-Flag der von ihr abhängigen Datensichten immer genau dann zurück, wenn der eigene Datensatzzeiger nach dem eigenen Aktualisieren oder Datensatzwechseln nicht wieder auf denselben Datensatz verweist wie zuvor, so dass es also extrem unwahrscheinlich ist, dass die von ihm abhängigen Datensichten unter den veränderten Selektionsbedingungen wieder denselben Datensatz enthalten.

### Beschreibung von bevorzugten Ausführungsbeispielen

Die Erfindung wird im Folgenden anhand von Ausführungsbeispielen unter Bezugnahme auf Figuren einer Zeichnung näher erläutert. Hierbei zeigen:
- Fig. 1: eine schematische Darstellung eines Ablaufs zum automatischen Aktualisieren von Datensichten,
- Fig. 2: eine schematische Darstellung eines Ablaufs zum automatischen Aktualisieren von Datensichten, wobei zusätzlich ein Hold-Flag berücksichtigt wird,
- Fig. 3: eine schematische Darstellung eines Netzwerkes von Datensichten und
- Fig. 4: eine schematische Darstellung eines weiteren Netzwerkes von Datensichten.

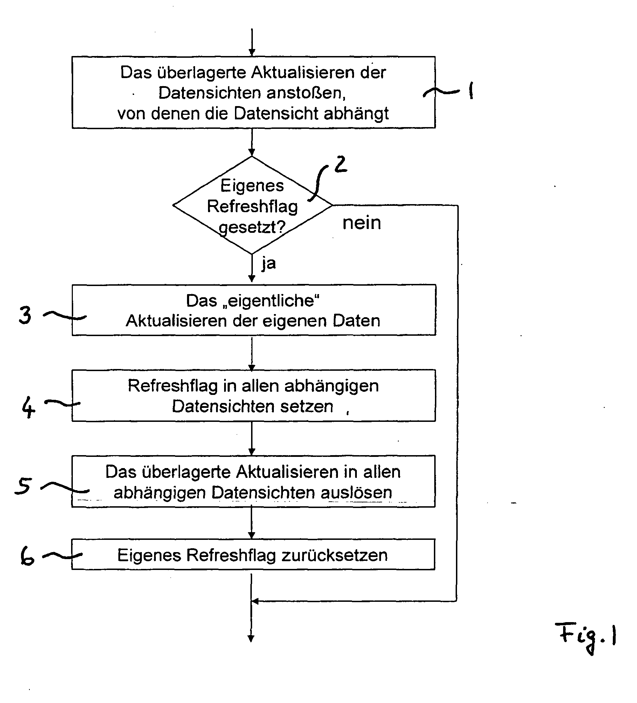

Fig. 1 zeigt eine schematische Darstellung eines Ablaufs zum Steuern einer automatischen Aktualisierung von Datensichten. Es ist ein komplexer Aktualisierungsprozess gezeigt, der das "eigentliche" Lesen von Daten aus einer Datenbank als einen wesentlichen Teilschritt enthält. In einem Schritt 1 wird das Aktualisieren aller Datensichten angestoßen, von denen die Datensicht abhängig ist. Im Schritt 2 prüft die angestoßene Datensicht, ob ihr Refresh-Flag gesetzt ist oder nicht. Nur dann, wenn dieses der Fall ist, werden im Schritt 3 die Daten aus der Datenbank tatsächlich aktualisiert, und nur dann gibt die Datensicht eine Information an alle von ihr abhängigen Datensichten, die aufgefordert werden, ihr eigenes Refresh-Flag zu setzen (Schritt 4). Erst danach löst die Datensicht im Schritt 5 das Aktualisieren in allen von ihr abhängigen Datensichten aus, unabhängig davon, von wem diese zuvor aufgefordert wurden, ihr Refresh-Flag zu setzen. Schließlich wird im Schritt 6 das eigene Refresh-Flag der Datensicht zurückgesetzt.

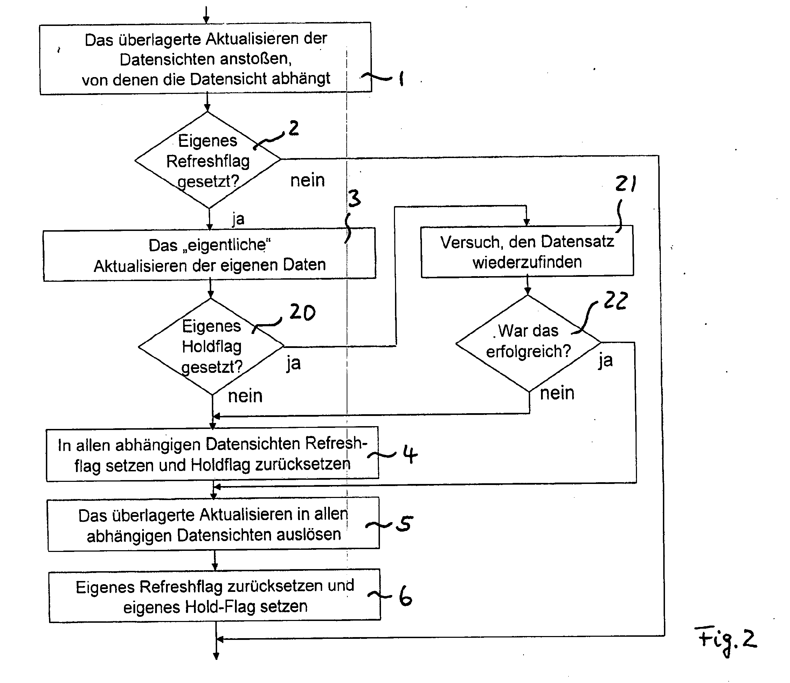

Fig. 2 zeigt eine schematische Darstellung eines Ablaufs zum automatischen Aktualisieren von Datensichten, wobei zusätzlich ein Hold-Flag berücksichtigt wird. Abweichend zu Fig. 1 wird nach dem "eigentlichen" Aktualisieren, also nach dem Lesen der Daten aus der Datenbank in einem Prüfschritt 20 durch die Datensicht zusätzlich geprüft, ob das eigene Hold-Flag gesetzt ist. Wenn ja, wird einem weiteren Schritt 21 versucht, den vorherigen Datensatz wiederzufinden. Für den Fall, dass dies erfolgreich war, was in einer Prüfung im Schritt 22 entschieden wird, wird das Setzen der Refresh-Flags in den abhängigen Datensichten (Schritt 4) übersprungen, weil sich die Bedingungen, die deren Abhängigkeit von dieser Datensicht definieren, nicht geändert haben können. Nichtsdestotrotz wird in den abhängigen Datensichten aber dennoch der Schritt 5 ausgeführt, weil die abhängigen Datensichten gegebenenfalls aus anderem Grund eine Refresh-Flag-Setzung erfahren haben könnten. Um stets korrekte Initialisierungen zu erreichen, werden die Schritt 4 und 6 aus Fig. 1 nun dahingehend erweitert, dass nicht nur Refresh-Flags gesetzt oder zurückgesetzt, sondern auch die Hold-Flags zurückgesetzt oder gesetzt werden.

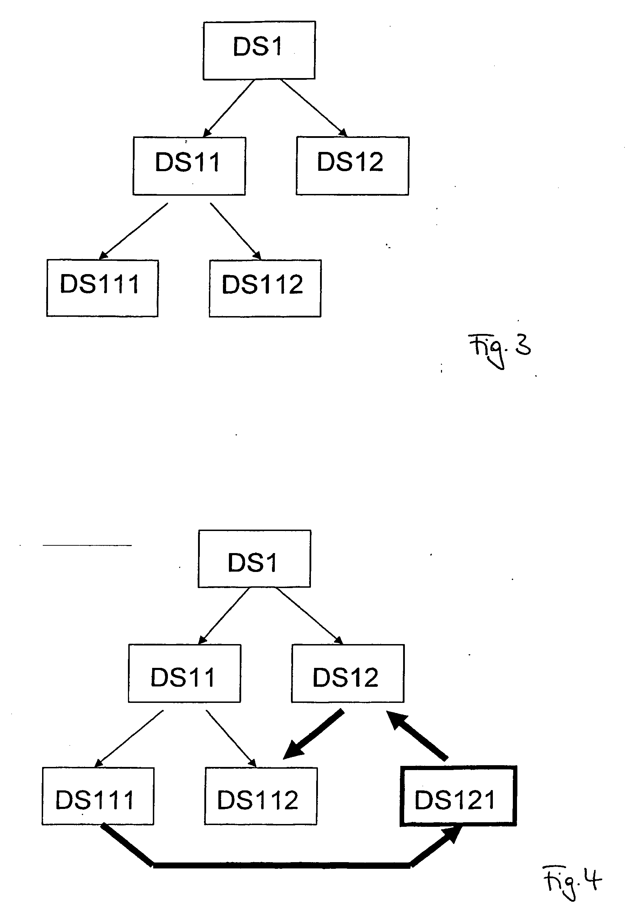

Fig. 3 zeigt eine schematische Darstellung eines Netzwerkes von Datensichten D1, D11, D12, D1111, D112. Dargestellt ist eine rein hierarchische Struktur mit eindeutig gerichteten Wirkbeziehungen nach einem Maser-Datei-Prinzip.

Fig. 4 zeigt eine schematische Darstellung eines weiteren Netzwerkes von Datensichten. Gezeigt ist ein Netzwerk von Datensichten mit Ausnahme- und Querbeziehungen, beispielsweise hängt die Datensicht DS 121 von der Datensicht DS 111 ab.

Ein zum Beispiel auf der von der Firma Microsoft bereitgestellten Entwicklungs- und Laufzeitumgebung ".net" aufsetzendes Rahmenprogramm steuert interne Abläufe einer universell anwendbaren Datenbankanwendungssoftware, welche beliebig viele Datensichten enthalten kann, die beliebig miteinander in Beziehung stehen können. Die Beziehungen bestehen in Form von Variablen innerhalb von Selektionsbedingungen zum jeweiligen SQL-Statement. Die Variablen enthalten Pointer auf Spalten anderer Datensichten (hier der Master-Datensicht).

Für jede Datensicht ist ferner ein Satzzeiger vorgesehen, so dass jede Datensicht immer jeweils einen konkreten "aktuellen" Datensatz hat. Die Abhängigkeiten zwischen den Datensichten wurden nun so implementiert, dass Selektionsbedingungen einer Detail-Datensicht auf jeweils eine Spalte in der jeweiligen Master-Datensicht zeigt. Durch Kombination mit dem aktuellen Wert des Datensatzzeigers in der Master-Datensicht ergibt sich nun, dass solche Selektionsbedigungen jeweils auf einen konkreten Wert zeigt, nämlich auf den Wert des Feldes in der Spalte in dem jeweils aktuellen Datensatz. Wird die Detail-Datensicht aus der Datenbank ausgelesen, dann verwendet sie also die aktuellen Werte aus dem aktuellen Datensatz der Master-Datensicht als Selektions- oder Auswahlkriterium und ermittelt so zum Beispiel in der Detail-Datensicht alle Umsatzdaten des jeweils aktiven Datensatzes in einer Produktliste in der Master-Datensicht.

Wird durch Benutzeraktion oder aus anderem Grund in der Master-Datensicht der Datensatz gewechselt oder gar die Datensicht aktualisiert, so müssen die Detaildaten ebenfalls aktualisiert werden, zumindest immer dann, wenn die Beziehungen zwischen beiden Datensichten derart sind, dass die Detaildatensicht nicht mehr aktuell sein könnte. Im vorangehend gegebenen Beispiel, weil nach dem Wechsel zu einem anderen Produkt auch dessen, also andere Umsatzdaten anzuzeigen sind.

Das System ist dafür ausgelegt, dass es eine große Anzahl von Datensichten enthalten kann, die beliebig voneinander abhängig sein können. Zu jeder Datensicht ist jeweils ein eigener .net-basierter *Dataset* mit einem zugehörigen SQL-Statement vorgesehen, und jeder Dataset enthält nun drei Variablen, nämlich den oben genannten Satzzeiger, das Refresh-Flag und das Hold-Flag.

Das Netzwerk der Beziehungen zwischen den Datensichten (vgl. zum Beispiel Fig. 4) besteht im Grunde genommen bereits von selbst, und zwar in Form aller Selektionskriterien, die keine festen Werte, sondern variable Verweise auf Inhalte in anderen Datensichten enthalten. Redundant wird dieses Beziehungsnetzwerk beim Codegenerieren noch einmal in vereinfachter und kompakter Form (von Datensicht / Spalte → nach Datensicht / Spalte) an zentraler Stelle abgespeichert.

Der Aktualisierungsmechanismus wird in einem Ausführungsbeispiel gerade nicht im Sinne einer zentralen Steuerung implementiert, sondern mittels rekursiv wirkender Mechanismen. Jede Datensicht wirkt sozusagen "eigenintelligent", indem ein rekursiv wirkender Aktualisierungsablauf wie in Fig. 1 und Fig. 2 für zumindest eine Datensicht angestoßen wird, welche dann wegen des Rekursionsmechanismus entsprechende Kaskaden auslöst. Gesteuert durch die Wirkungen auf andere Datensichten, wie in Fig. 1 und Fig. 2 als Schritte 1, 4 und 5 dargestellt, wird nun "eigenintelligent" das gesamte Netzwerk der Datensichten durchlaufen, mit der Folge, dass sich eine sinnvolle Reihenfolge der "eigentlichen" Aktualisierungen der Daten und ein kontrolliertes Wiederfinden vorheriger Datensätze automatisch einstellt.

Um gänzlich unnötige Aktualisierungen oder unnötige Mehrfachaktualisierungen zu vermeiden, wird nicht immer sofort eine Aktualisierung (Refresh) aller abhängigen Datensichten angestoßen, sondern es wird zuerst ermittelt, welche Datensichten zu aktualisieren sind, indem die entsprechenden Refresh-Flags gesetzt werden (vgl. Ausführungen zu Fig. 1 oben). Dies erfolgt rekursiv, indem jede Datensicht die Flagsetzung nur jener Datensichten anstößt, die direkt und unmittelbar von ihr abhängig sind, was sich entsprechend kaskadiert. Auch wenn eine Datensicht auf unterschiedlichen Wegen durch das Beziehungsnetzwerk anzustoßen ist, kann das Refresh-Flag nur einmal gesetzt werden, so dass die Aktualisierung in der Regel auch nur einmal erfolgt.

Ferner wird bei allen Datensichten, von denen eine Datensicht abhängig ist, im Schritt 1 in Fig. 1 und Fig. 2 der Aktualisierungsprozess vor dem eigenen "eigentlichen" Aktualisieren angestoßen. Hierdurch wird erreicht, dass die Reihenfolge des Anstoßens der Aktualisierungen gar keinen oder keinen wesentlichen Einfluss auf die sich letztlich einstellende Aktualisierungsabfolge hat.

Zusätzliche Hold-Flags (vgl. Fig. 2 oben) dienen dazu, auch nach einem Aktualisieren wieder dieselben Daten anzuzeigen wie vorher, sofern das angebracht ist. Dies hat dann auch den Vorteil, unnötige Aktualisierungen ganzer Zweige abhängiger Datensichten zu unterdrücken, wenn diese aufgrund der Wiederherstellung des Datensatzzeigers ohnehin wieder dieselben Daten anzeigen würden. Hierzu wird für jede Datensicht zusätzlich noch ein zweites Flag vorgesehen, nämlich das sogenannte Hold-Flag, was anzeigt, ob versucht werden soll, den Datensatz innerhalb der selektierten Datenmenge wiederzufinden. Das Hold-Flag wird ebenso wie das Refresh-Flag als ein 1-Bit-Speicher in unmittelbarem Zusammenhang mit der jeweiligen Datensicht implementiert, und zwar so, dass es beim Programmstart stets auf "falsch", sonst aber nach jedem abgeschlossenen Aktualisieren auf "wahr" steht.

Eine jede Datensicht setzt das Hold-Flag der von ihr abhängigen Datensichten immer genau dann zurück, wenn der eigene Datensatzzeiger nach dem eigenen Aktualisieren oder Datensatzwechseln nicht wieder auf denselben Datensatz verweist wie zuvor, so dass es also extrem unwahrscheinlich ist, dass die von ihm abhängigen Datensichten unter den veränderten Selektions- oder Auswahlbedingungen wieder denselben Datensatz enthalten. Dies wird daran festgestellt, ob es versucht wurde und gelungen ist, den Datensatz wiederzufinden.

Der erfindungsgemäße Aktualisierungsmechanismus kann nicht nur zur Unterstützung des Softwareentwicklungsprozesses eingesetzt werden, sondern insbesondere auch in endanwendertauglichen Datenbankabfragewerkzeugen, sowie in interaktiv konfigurierbaren (lesenden und schreibenden) Softwareprogrammen, welche als solche die Entwicklung individueller Software ersetzen und überflüssig machen.

## Patentansprüche

1. Verfahren zum Steuern einer automatischen Aktualisierung von Datensichten in einem Computersystem, die jeweils zugeordneten, eine logische Relation zu einem Datenbanksystem definierenden Filterparametern entsprechend gebildet werden und die einer Verknüpfungsstruktur entsprechend miteinander verknüpft sind, wobei ein Aktualisierungsprozess die folgenden Schritte umfasst:
- Empfangen einer Aufforderung, sich zu aktualisieren, durch eine Datensicht,
- Ausführen einer Aktualisierungsoperation durch die Datensicht, wobei bei der Aktualisierungsoperation die folgenden Schritte ausgeführt werden:
- Senden einer Aufforderung (1), sich zu aktualisieren, an weitere Datensichten, die nach der Verknüpfungsstruktur direkt in Beziehung zu der Datensicht stehen und von denen die Datensicht nach der Verknüpfungsstruktur abhängig ist,
- wenn ein Refresh-Flag der Datensicht gesetzt ist (2), Ausführen der folgenden Schritte:
- Aktualisieren der Datensicht mittels Zugriff auf das Datenbanksystem (3),
- wenn ein Hold-Flag der Datensicht gesetzt ist (20), erneutes Laden eines zugeordneten Datensatzes der Datensicht aus einer zuvor abgefragten Datenmenge,
- wenn das Hold-Flag der Datensicht nicht gesetzt ist (20), Ausführen der folgenden Schritte:
- Setzen eines jeweiligen Refresh-Flags und Zurücksetzen eines jeweiligen Hold-Flags in anderen Datensichten (4), die nach der Verknüpfungsstruktur direkt in Beziehung zu der Datensicht stehen und von der Datensicht abhängig sind,
- Senden einer Aufforderung, sich zu aktualisieren, an die anderen Datensichten (5) und
- Zurücksetzen des Refresh-Flags und Setzen des Hold-Flags durch die Datensicht (6) und
- wenn das Refresh-Flag der Datensicht nicht gesetzt ist (2), Beenden der Aktualisierungsoperation und
- Ausführen einer jeweiligen Aktualisierungsoperation durch die weiteren Datensichten und wahlweise die anderen Datensichten, wenn das Refresh-Flag der Datensicht gesetzt ist, wobei die jeweilige Aktualisierungsoperation der Aktualisierungsoperation der Datensicht entsprechend ausgeführt wird.

2. Verfahren nach Anspruch 1, **dadurch gekennzeichnet, dass** die Datensichten als lesende 1 schreibende Direktdatensichten gebildet werden.

3. Verfahren nach Anspruch 1 oder 2, **dadurch gekennzeichnet, dass** die Datensichten gemäß der Verknüpfungsstruktur einer hierarchischen Ordnung entsprechend miteinander verknüpft werden und dass das automatische Aktualisieren in einem von der Datensicht gebildeten Ursprung der hierarchischen Ordnung beginnend und sich dann der hierarchischen Ordnung entsprechend fortsetzend ausgeführt wird.

4. Verfahren nach mindestens einem der vorangehenden Ansprüche, **dadurch gekennzeichnet, dass** weiterhin die folgenden Schritte ausgeführt werden, wenn in der Datensicht ein Datensatzwechsel stattgefunden hat:
- Setzen des jeweiligen Refresh-Flags in den anderen Datensichten, die nach der Verknüpfungsstruktur direkt in Beziehung zu der Datensicht stehen und von der Datensicht abhängig sind,
- Senden einer Aufforderung, sich zu aktualisieren, von der Datensicht an die anderen Datensichten und
- Aktualisieren der anderen Datensichten mittels Zugriff auf das Datenbanksystem, sofern das jeweilige Refresh-Flag der anderen Datensichten noch gesetzt ist.

5. Verfahren nach mindestens einem der vorangehenden Ansprüche, **dadurch gekennzeichnet, dass** das Setzen des jeweils zugeordneten Refresh-Flags durch eine der anderen Datensichten unterdrückt wird.

## Claims

1. A method for controlling an automatic update of data views in a computer system, the data views being formed corresponding to respectively associated filter parameters defining a logical relation to a data base system and linked with each other corresponding to a linking structure, wherein an updating process comprises the following steps:
- receiving a request to update through a data view,
- executing an update operation through the data view, wherein during the update operation the following steps are carried out:
- sending a request (1) to update to further data views which according to the linking structure are directly related to the data view and on which, according to the linking structure, the data view depends,
- executing the following steps, if a refresh flag of the data view has been set (2):
- updating the data view by accessing the data base system (3),
- if a hold flag of the data view has been set (20), renewed loading of an associated data record of the data view from a previously requested data quantity,
- if a hold flag of the data view has not been set (20), executing the following steps:
- setting a respective refresh flag and resetting a respective hold flag in other data views (4) which, according to the linking structure are directly related to the data view and are depending upon the data view,
- sending a request to update to the other data views (5) and
- resetting the refresh flag and setting the hold flag through the data view (6) and
- if the refresh flag of the data view has not been set (2), terminating the update operation and
- executing a respective update operation through the further data views and optionally the other data views, if the refresh flag of the data view has been set, wherein the respective update operation is executed corresponding to the update operation of the data view.

2. The method according to claim 1, **characterised in that** the data views are formed as reading/writing direct data views.

3. The method according to claim 1 or 2, **characterised in that** the data views according to the linking structure are linked with each other corresponding to a hierarchic order and **in that** the automatic update is executed starting at an origin of the hierarchic order formed by the data view and then continuing corresponding to the hierarchic order.

4. The method according to one of the preceding claims, **characterised in that** further the following steps are carried out if a data set change has taken place in the data view:
- setting the respective refresh flag in the other data views which according to the linking structure are directly related to the data view and are depending upon the data view,
- sending a request to update from the data view to the other data views, and
- updating the other data views by accessing the data base system, insofar as the respective refresh flag of the other data views is still set.

5. The method according to one of the previous claims, **characterised in that** setting the respectively associated refresh flag is suppressed by one of the other data views.

## Revendications

1. Procédé pour commander une actualisation automatique de vues de données dans un système informatique, lesquelles sont formées de manière correspondante à des paramètres de filtre respectivement associés définissant une relation logique avec un système de base de données et lesquelles sont combinées ensemble conformément à une structure de combinaison, un processus d'actualisation comprenant les étapes suivantes :
- réception d'une invitation à s'actualiser par une vue de données,
- exécution d'une opération d'actualisation par la vue de données, les étapes suivantes étant exécutées lors de l'opération d'actualisation :
- envoi d'une invitation (1) à s'actualiser à l'attention d'autres vues de données, lesquelles sont en rapport direct avec la vue de données d'après la structure de combinaison et desquelles dépend la vue de données d'après la structure de combinaison,
- lorsqu'un drapeau de rafraîchissement de la vue de données est mis en place (2), réalisation des étapes suivantes :
- actualisation de la vue de données grâce à l'accès au système de base de données (3),
- si un drapeau de maintien de la vue de données est mis en place (20), renouvellement du chargement d'un jeu de données associé de la vue de données à partir d'une quantité de données préalablement interrogée,
- si le drapeau de maintien de la vue de données n'est pas mis en place (20), exécution des étapes suivantes :
- mise en place d'un drapeau de rafraîchissement respectif et remise en place d'un drapeau de maintien respectif dans d'autres vues de données (4), lesquelles sont directement en rapport avec la vue de données d'après la structure de combinaison et lesquelles dépendent de la vue de données,
- envoi d'une invitation à s'actualiser à l'attention des autres vues de données (5) et
- remise en place du drapeau de rafraîchissement et mise en place du drapeau de maintien par la vue de données (6) et
- si le drapeau de rafraîchissement de la vue de données n'est pas mis en place (2), terminer l'opération d'actualisation et
- exécution d'une opération d'actualisation respective par les autres vues de données et au choix, par les autres vues de données si le drapeau de rafraîchissement de la vue de données est mis en place, moyennant quoi l'opération d'actualisation respective est exécutée de manière conforme à l'opération d'actualisation de la vue de données.

2. Procédé selon la revendication 1, **caractérisé en ce que** les vues de données sont réalisées en tant que vues de données directes en lecture/écriture.

3. Procédé selon les revendications 1 ou 2, **caractérisé en ce que** les vues de données sont combinées ensemble conformément à la structure de combinaison de manière correspondante à un ordre hiérarchique et **en ce que** l'actualisation automatique est effectuée en commençant à une origine formée par la vue de données et en se poursuivant ensuite de manière correspondante à l'ordre hiérarchique.

4. Procédé selon l'une au moins des revendications précédentes, **caractérisé en ce que** l'on exécute par ailleurs les étapes suivantes lorsqu'un échange de jeu de données a eu lieu dans la vue de données :
- mise en place du drapeau de rafraîchissement respectif dans les autres vues de données, lesquelles sont en rapport direct avec la vue de données d'après la structure de combinaison et lesquelles dépendent de la vue de données,
- envoi d'une invitation à s'actualiser de la part de la vue de données à l'attention des autres vues de données et
- actualisation des autres vues de données à l'aide d'un accès au système de base de données dans la mesure où le drapeau de rafraîchissement des autres vues de données est encore mis en place.

5. Procédé selon l'une au moins des revendications précédentes, **caractérisé en ce que** la mise en place du drapeau de rafraîchissement respectivement associé est empêchée par l'une des autres vues de données.
